# EUROPÄISCHE PATENTANMELDUNG

(11) **EP 0 566 864 A1**
(43) Veröffentlichungstag der Anmeldung: **27.10.1993**
(21) Anmeldenummer: 93104217.0
(22) Anmeldetag: 16.03.1993
(51) Int. Cl.: F02F 11/00, F16J 15/08

(54) **Zylinderkopfdichtung für eine Brennkraftmaschine**

(30) Priorität: 24.04.1992 DE 4213502
(71) Anmelder: MAN Nutzfahrzeuge Aktiengesellschaft, 80976 München (DE)
(72) Erfinder: Schibalsky, Walter, W-8500 Nürnberg (DE)

(57) **Zusammenfassung**

Die Erfindung bezieht sich auf eine Zylinderkopfdichtung für eine Brennkraftmaschine. Die Abdichtung der Zylinderköpfe (3) hoch aufgeladener Brennkraftmaschinen bereitet zunehmend Schwierigkeiten. Erfindungsgemäß wird dieses Problem dadurch gelöst, daß die Zylinderkopfdichtung als zylindrischer Ring (1) ausgebildet ist, welcher eine relativ geringe Wandstärke aufweist. Dieser Ring (1) greift einerseits in eine koaxial zur Zylinderachse vorgesehene, in den Zylinderkopf (3) eingedrehte Ringnut (6) ein, andererseits stützt er sich gegen eine Eindrehung (7) am oberen Rand der Zylinderlaufbüchse ab. Die Ringnut (1) ist so dimensioniert, daß beim Anzug der Zylinderkopfschrauben zwischen Ringnut und Ring sowohl radiales als auch axiales Spiel verbleibt. Die Dichtwirkung wird dadurch erzielt, daß der im Verhältnis zu seiner Bauhöhe dünnwandige Ring (1) durch den Gasdruck eine radiale Dehnung erfährt und gegen die Außenwand der Ringnut bzw. gegen die Eindrehung der Zylinderlaufbüchse gepreßt wird und so zu einer Abdichtung führt. Die Dichtwirkung ist somit eine Funktion des Gasdruckes. Die Abdichtung gegen Kühlwasser erfolgt wie üblich durch eine mittels der Zylinderkopfschrauben vorgespannte Restflächendichtung.

## Beschreibung

Die Erfindung bezieht sich auf eine Zylinderkopfdichtung für eine Brennkraftmaschine gemäß dem Gattungsbegriff des Patentanspruches 1.

Zylinderkopfdichtungen werden üblicherweise aus relativ weichem Material ausgeführt und zwischen Zylinder oder Zylinderlaufbüchse einerseits und einem Zylinderkopf andererseits eingelegt und durch Zylinderkopfschrauben verspannt, bis plastische Verformung eintritt und durch Eindringen der Zylinderkopfdichtung in die Unebenheiten des Zylinderkopfes eine gasdichte Verbindung erzielt wird. Durch ungleiches Anziehen der Zylinderkopfschrauben und durch Kriechvorgänge verlieren derartige Dichtungen ihre Dichtwirkung. Außerdem müssen die Zylinderkopfschrauben so stark vorgespannt werden, daß es im Zylinderkopf, bzw. im Zylinder-Kurbelgehäuse zu unerwünschten Verformungen kommen kann.

Ausgehend von konventionellen Zylinderkopfdichtungen entsprechend dem Gattungsbegriff liegt der Erfindung die Aufgabe zugrunde, eine Zylinderkopfdichtung zu schaffen, welche ohne hohe Vorspannkraft der Zylinderkopfschrauben eine zuverlässige, über einen langen Zeitraum gleichmäßige Dichtwirkung auch gegen sehr hohe Zylinderdrücke garantiert.

Erfindungsgemäß wird diese Aufgabe durch die kennzeichnenden Merkmale des Patentanspruches 1 gelöst.

Durch den Formschluß des zylindrischen Ringes im Zylinderkopf und durch das Anpressen des Ringes an die Eindrehung der Zylinderlaufbüchse unter dem Einfluß des Gasdruckes wird eine zuverlässige Dichtung ohne axiale Vorspannung durch die Zylinderkopfschrauben erreicht.

Eine Weiterbildung der Zylinderkopfdichtung kann Anspruch 2 entnommen werden. Durch das Einschieben des Ringes in die Ausdrehung wird durch Formschluß eine Abdichtung bewerkstelligt, während der Ring durch die Gaskräfte gegen die Eindrehung der Zylinderlaufbüchse gedrückt und Selbstdichtung erreicht wird.

Eine weitere vorteilhafte Ausbildung der Zylinderkopfdichtung kann Anspruch 3 entnommen werden. Die Einschrumpfung des Ringes im Zylinderkopf führt ohne Vorspannung durch die Zylinderkopfschrauben zu einer Dichtung zwischen Ring und Zylinderkopf. Die Dichtwirkung zwischen Ring und Zylinderlaufbüchse wird durch den Gasdruck bewerkstelligt, der den Ring gegen die Ausdrehung preßt.

Eine Verbesserung des Formschlusses zwischen Ring und Zylinderkopf wird nach Anspruch 4 erreicht. Durch die konische Ausbildung von Ring und Nut wird der Formschluß verbessert und damit zusätzliche Sicherheit gegen Durchtreten von Brenngasen erzielt.

Eine besondere Verbindung von Ring und Zylinderlaufbüchse zeichnet sich durch die Merkmale des Anspruches 5 aus. Durch die Einheit des Ringes mit der Zylinderlaufbüchse wird hier absolute Dichtheit gewährleistet.

Das Merkmal des Anspruches 6 zeichnet sich dadurch aus, daß die Flächenpressung erhöht und die Dichtwirkung dadurch verbessert wird.

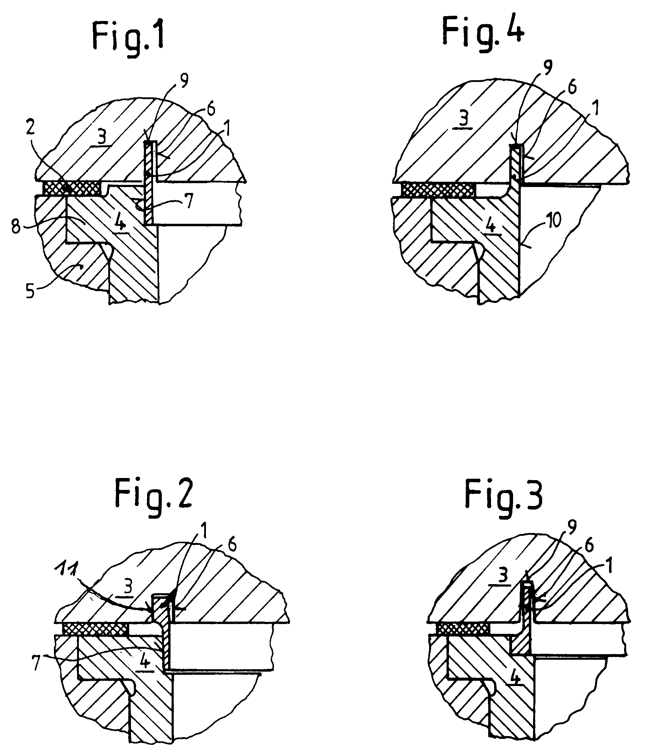

Ausführungsbeispiele der Zylinderkopfdichtung sind in Zeichnungen dargestellt. Es zeigt:
- Figur 1: einen Ring in den Zylinderkopf eingepaßt
- Figur 2: einen Ring in den Zylinderkopf eingeschrumpft
- Figur 3: einen Ring mit konisch verlaufendem Bereich im Bereich des Zylinderkopfes
- Figur 4: einen Ring in den Zylinderkopf eingepaßt in baulicher Einheit mit der Zylinderlaufbüchse
- Figur 5: einen Schnitt durch den Ring mit umlaufenden Aussparungen
Nach Figur 1 besteht eine Zylinderkopfdichtung aus einem zylindrischen Ring 1 und einer Restflächendichtung 2. Die Restflächendichtung 2 wird mittels hier nicht dargestellter Zylinderkopfschrauben zwischen einem Zylinderkopf 3 und einer Zylinderlaufbüchse 4 vorgespannt. Die Zylinderlaufbüchse ist in ein Zylinder-Kurbelgehäuse 5 eingebaut. Der zylindrische Ring 1 ist einerseits in eine Ringnut 6 eingepaßt welche konzentrisch zu einer Zylinderachse angeordnet ist, andererseits stützt sich der zylindrische Ring 1 auf seiner Außenseite gegen eine Eindrehung 7 eines Bundes 8 der Zylinderlaufbüchse 4 ab. Bei Belastung durch den Innendruck der Gaskräfte preßt sich der Ring 1 gegen die Eindrehung 7 und wirkt in diesem Bereich selbstabdichtend. Gegenüber der Ringnut 6 weist der Ring nur geringes Spiel auf, so daß auch in diesem Bereich ausreichende Dichtheit erzielt wird. Die Ringnut weist im Einbauzustand des Ringes 1 in ihrem Grund 9 ein Spiel auf, so daß auf den Ring 1 keine Axialkräfte ausgeübt werden. Der Ring 1 kann daher in Bezug auf seine Höhe relativ dünn ausgeführt werden. Als Folge der geringen Dicke des Ringes 1 erfährt er durch den Gasdruck eine radiale Dehnung und wird auf seiner Außenseite gegen den Zylinderkopf 3 und die Eindrehung 7 gepreßt was zu einer Selbstabdichtung führt.

Figur 2 zeigt eine Variante des Ringes 1. Der Ring 1 ist im Bereich der Ringnut 6 des Zylinderkopfes 3 auf der Außenseite 11 eingeschrumpft, so daß neben einem Formschluß auch ein Kraftschluß erreicht wird. Im Bereich der Eindrehung 7 der Zylinderlaufbüchse 4 stützt sich der Ring 1 wieder auf seiner Außenseite ab. Die Schrumpfverbindung im Bereich der Ringnut 6 sorgt hier für absolute Gasdichtheit. Im eingebauten Zustand ist der Ring 1 mit axialem Spiel gegenüber der Zylinderlaufbüchse 4 eingebaut.

Eine weitere Variante zeigt Figur 3. Der Ring 1 weist in dem Bereich welcher in die Ringnut 6 des Zylinderkopfes 3 ragt eine Konizität auf. Beim Einpassen des Ringes 1, insbesondere beim Anziehen der Zylinderkopfschrauben, preßt sich dieser wie ein Keil gegen die Wände der Ringnut 6 und führt zu vollkommener Gasdichtheit. Am Grund 9 der Ringnut 6 ist ein Spiel vorhanden, um in jedem Fall ein Anlegen des Ringes an die Wände der Ringnut 6 zu gewährleisten.

Bei einer Ausführungsform nach Figur 4 bildet der Ring einen Bestandteil der Zylinderlaufbüchse, wobei die Innenseite des Ringes 1 kontinuierlich in eine Lauffläche 10 der Zylinderlaufbüchse 4 übergeht. Der Ring 1 ist ferner in die Ringnut 6 des Zylinderkopfes 3 eingepaßt und der Ring 1 weist im eingebauten Zustand gegenüber dem Grund 9 der Ringnut 6 ein Spiel auf.

Sämtlichen Ausführungsformen nach den Figuren 1, 2, 4 ist gemein, daß sie abgesehen von der Restflächendichtung 2 keiner Vorspannung durch die Zylinderkopfschrauben bedürfen. Lediglich die Ausführung nach Figur 3 wird beim Anzug der Zylinderkopfschrauben leicht in axialer Richtung vorgespannt, so daß der konisch geformte Ring 1 gegen die Seitenwände der Ringnut 6 gepreßt wird. Durch die geringe Vorspannkraft der Zylinderkopfschrauben wird ein Verzug des Zylinder-Kurbelgehäuses 5 bzw. des Zylinderkopfes 3 vermieden und die Dichtwirkung leidet auch nicht beim Nachlassen der Vorspannkraft der Zylinderkopfschrauben. Aus diesem Grunde bedarf es auch keines Nachziehens der Zylinderkopfschrauben.

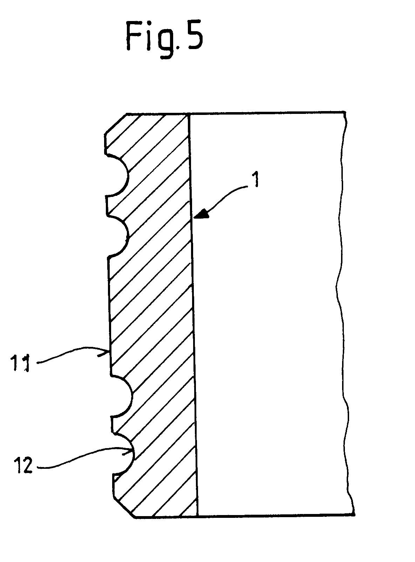

Figur 5 zeigt einen Schnitt durch den zylindrischen Ring 1. Auf seiner Außenseite 11 weist der Ring 1 umlaufende Aussparungen 12 auf. Durch diese Aussparungen 12 wird die Restfläche verringert, die Flächenpressung erhöht und die Flexibilität gesteigert. Die auf die Innenseite des Ringes 1 wirkenden Gaskräfte pressen den Ring auf der Außenseite 11 gegen die aus den Figuren 1 und 2 zu ersehende Aussparung 7 der Zylinderlaufbüchse 4 und führen dort zu einer Verbesserung der Dichtwirkung.

Diese Aussparungen sind auch bei der Ausführung nach Figur 4 denkbar.

## Patentansprüche

1. Zylinderkopfdichtung für eine Brennkraftmaschine, bei der die Zylinderkopfdichtung zwischen einem Zylinderkopf und einer Zylinderlaufbüchse angeordnet ist und die Zylinderkopfdichtung von einer Restflächendichtung umgeben wird, welche durch Anziehen von Zylinderkopfschrauben zwischen dem Zylinderkopf und einem Bund der Zylinderlaufbüchse vorgespannt wird, dadurch gekennzeichnet, daß die Zylinderkopfdichtung als zylindrischer Ring (1) ausgebildet ist, der koaxial zu einer Zylinderachse angeordnet ist, daß der zylindrische Ring (1) im Verhältnis zu seiner Höhe eine geringe Dicke aufweist, daß der zylindrische Ring (1) einerseits in eine Ringnut (6) des Zylinderkopfes (3) eindringt, und daß sich der Ring (1) andererseits gegen eine im Bereich des Bundes (8) der Zylinderlaufbüchse (4) angeordnete, der Außenform des Ringes (1) angepaßte Eindrehung (7) abstützt.

2. Zylinderkopfdichtung nach Anspruch 1, dadurch gekennzeichnet, daß der zylindrische Ring (1) mit geringem radialen Spiel in die Ringnut (6) eingepaßt ist, und daß zwischen einem Grund (9) der Ringnut (6) und dem zylindrischen Ring (1) nach Anzug der Zylinderkopfschrauben ein Spiel verbleibt (Figur 1).

3. Zylinderkopfdichtung nach Anspruch 1, dadurch gekennzeichnet, daß der zylindrische Ring (1) auf seiner Außenseite (11) in die Ringnut (6) eingeschrumpft ist, während auf seiner Innenseite ein Spiel verbleibt, daß der in die Ringnut (6) eindringende Teil des Ringes (1) in seiner Dicke verstärkt ist, und daß zwischen der Eindrehung (7) in den Bund (8) der Zylinderlaufbüchse (4) und dem zylindrischen Ring (1) nach Anzug der Zylinderkopfschrauben ein axiales Spiel verbleibt (Figur 2).

4. Zylinderkopfdichtung nach Anspruch 1, dadurch gekennzeichnet, daß der zylindrische Ring (1) in dem Bereich, der in die Ringnut (6) des Zylinderkopfes (3) eindringt leicht konisch geformt ist, daß die den Ring (1) aufnehmende Ringnut (6) die gleiche Konizität aufweist, und daß der Ring (1) im Bereich der Eindrehung (7) des Bundes (8) der Zylinderlaufbüchse (4) in seiner Dicke verstärkt ist (Figur 3).

5. Zylinderkopfdichtung nach Anspruch 1, dadurch gekennzeichnet, daß der zylindrische Ring (1) mit der Zylinderlaufbüchse (4) eine bauliche Einheit bildet welche in die Ringnut (6) des Zylinderkopfes (3) eindringt, daß der Ring (1) auf seiner Innenseite kontinuierlich in eine Lauffläche (10) der Zylinderlaufbüchse (4) übergeht, und daß zwischen dem Grund (9) der Ringnut (6) im Zylinderkopf (3) und dem zylindrischen Ring (1) nach Anzug der Zylinderkopfschrauben ein Spiel verbleibt (Figur 4).

6. Zylinderkopfdichtung nach einem der Ansprüche 1 bis 4, dadurch gekennzeichnet, daß der zylindrische Ring (1) auf seiner Außenseite (11) umlaufende Aussparungen (12) aufweist (Figur 5).
